# EUROPEAN PATENT SPECIFICATION

(11) **EP 2 917 391 B1**
(45) Date of publication and mention of the grant of the patent: **29.05.2019**
(21) Application number: 13802860.0
(22) Date of filing: 05.11.2013
(51) Int. Cl.: D03D 1/00, D04C 1/02, D04C 1/06, D03D 3/00, D03D 3/02, D03D 11/02, D03D 15/00, F21V 8/00

(54) **ACTIVELY LIGHT EMITTING ELEMENT COMPRISING A TEXTILE SHEATH AND A SIDE-EMITTING OPTICAL FIBRE**
AKTIV LICHTEMITTIERENDES ELEMENT UMFASSEND EINE TEXTILE HÜLLE UND EINE SEITENLICHTFASER
ELEMENT ACTIF EMETTANT DE LA LUMIERE COMPRENANT UNE GAINE TEXTILE ET UNE FIBRE OPTIQUE A EMISSION LATERALE

(30) Priority: 06.11.2012 CZ 20120754
(43) Date of publication of application: 16.09.2015
(73) Proprietor: Technicka Univerzita V Liberci, 461 17 Liberec 1 (CZ); SCILIF s.r.o., 252 29 Lety (CZ)
(72) Inventor: KREMENAKOVA, Dana, 46006 Liberec (CZ); LEDL, Vit, 463 12 Liberec 25 (CZ); MILITKY, Jiri, 46006 Liberec (CZ); BUBELOVA, Blanka, 40778 Velky Senov (CZ); MERYOVA, Barbora, 47201 Doksy (CZ)
(74) Representative: Musil, Dobroslav
(86) International application number: PCT/CZ2013/000143
(87) International publication number: WO 2014/071898

(56) References cited:
- EP-A1- 2 267 204
- EP-A1- 2 472 297
- DE-U1- 20 121 625
- KR-A- 20100 114 809
- US-A- 5 995 702
- US-A1- 2003 044 155
- US-A1- 2009 291 606
- US-A1- 2011 038 138
- US-A1- 2011 269 358

## Description

### Technical field

An actively light emitting safety element, which contains a side-emitting optical fiber, which is at least at one end connected to a light source.

### Background art

The beginning of the development of reflective highlighting elements is related to the expansion of transport. Nowadays, apart from the well-known types of reflective glass, also reflective textiles are used in the form of stripes, spots and the like. The drawback of the reflective textiles is the fact that their luminous effect only shows provided they are radiated by light emitted by an active light source. This is a disadvantage in transport, since, for example, in the case of a pedestrian walking on the roadside on a bend it is usually too late when he is radiated by the vehicle's headlights. Such passive elements are inapplicable for orientation in the dark as well, for instance for checking patients confined to bed when it is not advisable to disturb the patient with a torch.

Optical fibers have become an active highlighting element of textile products. They enable the weaving of various two-dimensional patterns, which can be employed both for decorative reasons and for the purpose of highlighting the clothing in terms of safety of an individual wearing such luminous or fluorescent clothing under low visibility conditions.

For such textile materials is used one group of fibers which carry light over a certain distance, whereby it is important for the fiber to transmit the light output without great loss and emit maximum light practically only at the end of the fiber opposite to the entering light source. A second group of fibers are side-emitting optical fibers, where, on the contrary, it is required that light should be emitted along the whole length of the fiber with equal intensity. It is a well-known fact that change in intensity of the emitted light occurs both at places of controlled or uncontrolled damage to the outer layer of the optical fiber and at the points of its deformations, for example bendings.

Also, there are well-known possibilities how to intentionally change light intensity or its colour.

Depositing fibers in a fabric is usually solved by weaving a optical-fiberthread into the basic textile material.

CZ299207B6 is a patent protection of a fabric, in which some of its warp or weft threads are formed by optical fibers, which in a certain part are not interwoven, being joined together and connected to a source of light.

According to WO2005049905A1 optical fibers are woven parallel in the fabric, for example as part of a warp, whereby on the fabric across the direction of the warp threads there are created bendings which will hardened by heating. This is based on the change in side light emitting at the point of the bending.

The solution according to US3508589A creates luminous patterns on a textile by changing in principle fully reflective surface of the optical-fiber core by disruption the reflective layer by scratching, bending the optical fiber, chemically or by heating.

A common feature of the solutions according to the background art is a fabric whose two-dimensional parts are formed by optical fibers, which are part of warp and/or weft threads. The optical fibers themselves are provided on the surface with a reflective layer for carrying light inside the optical fiber, side-emitting being achieved by controlled disruption of the reflective layer and/or by local deformations.

These textile structures contain optical fibers, whose parts that are supposed to emit light actively passes onto the surface. The major disadvantage of these solutions that follows from this is that these optical fibers are not protected from the environmental influences. During use the textiles are then damaged mechanically and chemically from wear and as a result of maintenance, as well as due to UV component of light. The applicability of these structures is therefore substantially limited.

US 2009 291 606 discloses an illuminating complex with a light source having a textile web incorporating optical fibers in the warp and/or weft directions. The fibers are associated with binding yarns, and the optical fibres are capable of emitting light laterally. The textile web is attached to a rigid or semi-rigid backing, and a bonding intermediate allows the textile web to be at least partly attached in an irreversible manner to the rigid backing.

KR 2010 0114809 discloses a fabric providing light emitting pattern provided to supply various light emitting patterns to the fabric pattern by not general point light emitting but linear light emitting, thereby providing more deluxe light emitting pattern. A fabric material is manufactured into textile in a specific fabric pattern having a through path. Electro Luminescence (EL) wire is inserted within the textile through the through path. A driving device is connected to one end part of the EL wire. The driving device provides DC (Direct Current) power to EL wire. The textile pattern blocks at least one part of the EL wire. When the EL wire is light-emitted by driving device, a light emitting pattern is generated from the specific textile pattern.

EP 2 472 297 A1 discloses a method of improving the effect of a laterally light emitting light guide that is created with a light-conducting fiber or a bundle of light-conducting fibers which is with one end connected to the source of light, whereas the other end is fitted with a reflective closure, whereby in the first step a flat or spherical surface is created at the end of the light guide and in the second step this surface is polished and a reflective layer is applied on the polished surface. The invention also relates to a laterally light emitting light guide and an optically active textile which contains it.

US 2003 044 155 A1 discloses a flexible carrier for supporting and protecting elongated items, such as optical fibers. The carrier is formed from a substrate of interlaced filamentary members which may be woven, knitted or braided together. The elongated items are interlaced with or otherwise captured by the substrate during its manufacture. Various configurations of the substrate, such as flat, pleated and tubular, are feasible. Capturing of the elongated members may be affected by integrally woven tubes formed within the substrate, by interweaving the items as warp yarns in a woven substrate or by laying in of the items in a knitted substrate.

A Common disadvantage of these solutions is limited usability and limited side radiation through the textile sheath.

The goal of the invention is to propose actively emitting elements, which would contain a side-emitting optical fiber, and to ensure protection of its surface. These elements would be used for temporary or permanent attachment to objects or people who should be highlighted by light.

### Principle of invention

The aim of the invention is achieved by an actively light emitting safety element according to claim 1.

### Description of drawings

Examples are schematically represented in the drawing, where Fig. 1 is background art, where an optical fiber embedded in a textile tubular braid formed by interweaving diagonally reversely knit threads, in Fig. 2 the optical fiber is embedded in a tube of a bordering woven textile band according to the present invention, Fig. 3 is background art with a cross section of an optical fiber located in a tubular weave of a woven ribbon of a hollow shape, in Fig. 4 the optical fiber is embedded in a woven ribbon with selvedges with a tube positioned in the surface according to the present invention, Fig. 5 represents background art with a two-layer strap in a cross section perpendicular to the warp threads and Fig. 6 shows background art with a Jacquard three-layer strap in a cross section perpendicular to the weft threads.

### Specific description

The solution according to the invention utilizes an optical fiber 1 created on the basis of side-emitting polymer optical fibers (POF). In the described embodiments connected to the inlet of the optical fiber 1 in a well-known detachable manner is an unillustrated source of light which serves to illuminate the optical fiber. The source of light is a LED or laser diode radiating in the whole spectrum (white), or only in a narrow part of the spectrum (coloured LED), or a UV light emitting diode. The light source is connected by a conductor to an unillustrated miniature current source that consists of a current controlled circuit and an accumulator or a primary electric cell.

In a variant of embodiment a source of UV light is used for illuminating the optical fiber, whereby a luminophore is applied on the surface of the optical fiber, transforming the energy of UV light into visible light. Moreover, it is possible to employ a yellow-green luminophore with high lucidity, as well as a variety of other colours. The colours of the luminophore can be altered randomly so as to increase the warning effect.

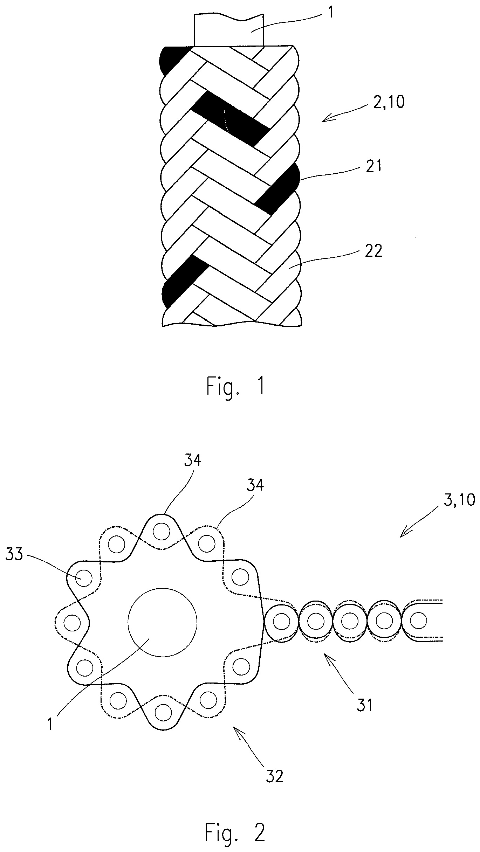

Fig. 1 represents background art with an optical fiber **1**, whose entire radiating surface is embedded in a sheath **10,** which is preferably a textile in the form of a fabric, knitted fabric or stitch-bonded fabric. In the example according to Fig. 1 the sheath **10** is formed by a textile tube **2,** which is produced by the technology of braiding. The tube **2** is a textile tubular spliced braid, the production of which takes place on knit-stitch machines appropriately adjusted for incorporating the optical fibers **1** during the process of braiding. The machine adjustment is intended to prevent damage to the optical fiber **1** during this process. The braid is composed of a longitudinal set of diagonally reversely interwoven threads, strands of threads, little cables, small cords, ribbons, or bands. The tube **2** may be single-coloured, or striped, using for example spliced threads **21**, **22** of two different colours.

The types of sheath **10** of the optical fibers **1**, mentioned hereinafter, are produced by the technology of weaving. The sheath **10** of the optical fiber **1** is according to Fig. 2 formed by a narrow two-dimensional textile (3) with a tubular edge. The textile **3** is formed by a band (a woven textile in basic textile weaves comprising two sets of threads, i.e. the warp and the weft, with selvedges) **31**, one edge of which is created as a tube **32.** The optical fiber **1** is arranged in the tube **32.** The warp threads **33** lead in a longitudinal direction, the weft threads **34** lead in a crosswise direction of the braid **3**. A known method of weaving the textile **3** is apparent from Fig. 2.

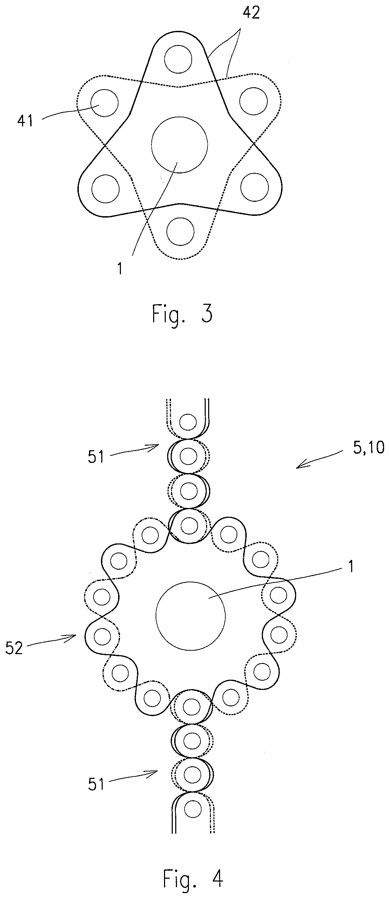

In Fig. 3 background art is shown with a cross section of the optical fiber **1**, whose sheath is a ribbon woven in a tubular weave **4** of a hollow shape. The warp threads **41** being in the direction of the tube of the ribbon **4**, are interwoven in principle by circumferential weft threads **42**.

Fig. 4 is a cross section of the optical fiber **1** embedded in a woven ribbon **5** with selvedges **51** with a tube **52** positioned in the surface, whereby the tube **52** constitutes the sheath **10** of the optical fiber **1**. The method of production is similar to the method of production of the tube **3**, or, as the case may be, it is a combination of methods used for the production of the tube **3** and the tubular woven ribbon **4**.

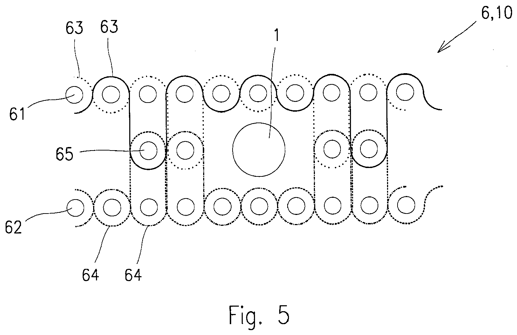

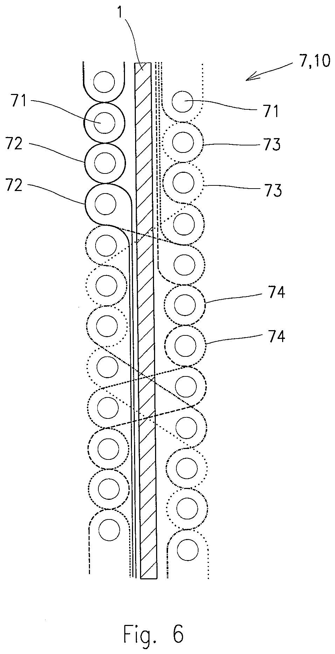

According to the background art shown in Fig. 5 and 6 the optical fiber **1** is part of a textile strap, which is a woven two-dimensional fabric that is coarser and tougher than a ribbon. The sheath **10** of the optical fiber **1** is formed by the textile material of the strap.

The strap **6** illustrated in Fig. 5 in a cross section in relation to the direction of the warp consists of two sets **61**, **62** of warp threads, whereby the set **63** of weft threads belonging to the set **61** of warp threads and the set **64** of weft threads belonging to the set **62** of warp threads are mutually bound by binders **65** (i.e. by a set of warp threads connecting the sets **61** and **62** of warp threads) parallel with the direction of the warp and arranged between the sets **61**, **62** of warp threads.

The optical fiber **1** is parallel with the direction of the warp and is arranged between the two sets **61**, **62** of warp threads in the strap, whereby the colour of the side-emitting light radiated from the strap **6** is determined by the colour of the threads of the sets **61**, **62**, **63**, **64**.

The Jacquard strap **7** represented in Fig. 6 in a longitudinal cross section in relation to the direction of weft threads **71** is formed by three sets **72**, **73**, **74** of warp threads of different colours which, for example, alternate cyclically on the first and second surfaces of the strap **7**.

The optical fiber **1** is parallel with the direction of the warp and is arranged between three sets **72, 73, 74** of warp threads in the strap, whereby the colour of the side-emitting light radiated from the strap **7** is determined by the colour of sets **71, 72, 73, 74** of all threads.

For production of tubular woven ribbons conventional textile weaving machines are used, adjusted for interweaving optical fibers **1**. Weft threads are in a well-known manner inserted intermittently into the warp.

Preferably, the diameter of the optical fibres **1** is in the range of 0.25 - 20 mm. The length of the optical fiber **1** is limited by the intensity of the light source and by the adequate decrease in the intensity of light along the optical fiber. A considerable decrease in the light intensity is caused, among others, for example by the places of the bends of the optical fiber, which have a small diameter. Under optimum conditions the length of the optical fiber **1** is approximately 10 m. In order to reduce the decrease in light intensity it is advantageous to provide the end of the optical fiber **1** opposite to the light source by any of the well-known methods, for example with a mirror surface reflecting a corresponding part of the light back to the core of the optical fiber **1.**

The actively light emitting safety elements according to the invention can be utilized as separate components which can be detachably attached to clothes, bags, rucksacks, means of travel (for example to a bicycle, scooter, motorcycle, car, pram, wheelchair), to objects in the interior for orientation in lower visibility, for example for indicating emergency zones, dangerous area boundaries, signs for places, such as "no entry", etc. It is also possible to use them under conditions of lower visibility to highlight temporary landing areas, to illuminate animals and the like. Above all, it is advisable to attach them to garments and other textile items by sewing on, sticking or in another suitable manner of fastening.

Their advantage is long operational lifetime, low demand for energy, the ability of the optical fiber to resist damage, colour variability, effortless replacement, etc.

Unlike the known actively emitting fabrics, in which the optical fibers are part of the weft or warp system, the solution according to the invention provides protection of the optical fiber by a layer of standard textile fiber from UV rays and other influences from the surrounding environment which would reduce its wear life. Furthermore, the textile sheath of the optical fiber makes it possible to create various colour effects while maintaining sufficient luminous intensity.

Being able to switch off the light source easily is convenient for cleaning, for example for washing a garment, or it is suitable if using the light reflecting element is not needed for a long period of time.

Covering the optical fiber with a textile is carried out by well-known methods of technology of interweaving in various weaves, on conventional machines enabling production of textile bands with selvedges using a variety of textile materials.

### List of references

- 1: optical fiber
- 10: sheath (textile protection of the optical fiber)
- 2: textile tube
- 21: spliced thread
- 22: spliced thread
- 3: bordering braid
- 31: band (of the bordering braid)
- 32: tube (of the bordering braid)
- 33: warp threads (of the bordering braid)
- 34: weft threads (of the bordering braid)
- 4: tubular woven ribbon
- 41: warp threads (of tubular woven ribbon)
- 42: weft threads (of tubular woven ribbon)
- 5: woven ribbon
- 51: selvedge (of woven ribbon)
- 52: tube (of woven ribbon)
- 6: strap
- 61: set of warp threads (of strap)
- 62: set of warp threads (of strap)
- 63: set of weft threads (of strap)
- 64: set of weft threads (of strap)
- 65: binder
- 7: Jacquard strap
- 71: weft threads (of Jacquard strap)
- 72: set of warp threads
- 73: set of warp threads
- 74: set of warp threads

## Claims

1. An actively light emitting safety element, which comprises a side-emitting optical fiber (1) and a light source, wherein the optical fiber (1) is arranged in a textile sheath (10) and is connected at least at one of its ends to the light source, whereby the light emitted by the light source is radiated by the optical fiber (1) into the surrounding environment through the sheath (1), **characterized in that** the optical fiber (1) is a single fiber and **in that** the textile sheath (10) is a narrow two-dimensional woven textile band (3) made up of longitudinal warps threads (33) and crosswise weft threads (34), one edge of which is created as an integrally woven tube (32) and wherein the optical fiber (1) is arranged in the tube (32), or **in that** the textile sheath (10) is a woven ribbon (5) with two selvedges (51) with an integrally woven tube (52) positioned in the surface of the ribbon (5) between the two selvedges (51) and wherein the optical fiber (1) is arranged in the tube (52).

2. An actively light emitting safety element according to Claim 1, **characterized in that** the light source is a source of visible light.

3. An actively light emitting safety element according to Claim 1, **characterized in that** the light source is a source of UV light.

4. An actively light emitting safety element according to Claim 3, **characterized in that** the surface of the optical fiber (1) is provided with a luminophore.

5. An actively light emitting safety element according to any of the preceding claims, **characterized in that** the textile sheath (10) has crosswise and/or lengthwise stripes differing in colour.

6. An actively light emitting safety element according to any of the preceding claims, **characterized in that** the optical fiber (1) is a polymeric side-emitting optical fiber.

## Patentansprüche

1. Aktives lichtausstrahlendes Sicherheitsmittel, das einen seitenausstrahlenden Lichtleiter (1) und eine Lichtquelle aufweist, wobei der Lichtleiter (1) in einem Textilbezug (10) gelagert ist und an mindestens einem seiner Enden mit der Lichtquelle verbunden ist, wobei das von der Lichtquelle emittierte Licht durch den Lichtleiter (1) ins Außenumfeld über den Bezug (10) ausgestrahlt wird, **dadurch gekennzeichnet, dass** der Lichtleiter (1) einfaserig ist und der Textilbezug (10) ein enges zweidimensionales Gewebetextilband (3) ist, das durch Längskettfäden (33) und Querschussfäden (34) gebildet wird, dessen ein Rand als integral gewebte Hülse (32) gebildet wird und wo der Lichtleiter (1) in dieser Hülse (32) gelagert wird, oder dadurch, dass der Textilbezug (10) ein gewebtes Band (5) mit zwei Rändern (51) mit einer integral gewebten Hülse (52) ist, die auf der Oberfläche des Bandes (5) zwischen diesen zwei Rändern (51) angebracht ist und wo dieser Lichtleiter (1) in der Hülse (52) angeordnet ist.

2. Aktives lichtausstrahlendes Sicherheitsmittel nach dem Anspruch 1, **dadurch gekennzeichnet, dass** die Lichtquelle eine Quelle des sichtbaren Lichtes ist.

3. Aktives lichtausstrahlendes Sicherheitsmittel nach dem Anspruch 1, **dadurch gekennzeichnet, dass** die Lichtquelle die UV-Lichtquelle ist.

4. Aktives lichtausstrahlendes Sicherheitsmittel nach dem Anspruch 3, **dadurch gekennzeichnet, dass** die Oberfläche des Lichtleiters (1) einen Leuchtstoff aufweist.

5. Aktives lichtausstrahlendes Sicherheitsmittel nach einem der vorangehenden Ansprüche, **dadurch gekennzeichnet, dass** der Textilbezug (10) Quer- und/oder Längsbänder aufweist, die sich in der Farbe unterscheiden.

6. Aktives lichtausstrahlendes Sicherheitsmittel nach einem der vorangehenden Ansprüche, **dadurch gekennzeichnet, dass** der Lichtleiter (1) durch eine polymere seitenausstrahlende optische Faser gebildet wird.

## Revendications

1. Dispositif actif de sécurité à émission de lumière comprenant un guide de lumière à rayonnement latéral (1) et une source de lumière, tandis que le guide de lumière (1) est logé dans le revêtement textile (10) et il est connecté à au moins l'une de ses extrémités avec la source de lumière, tandis que la lumière produite par la source de lumière est émise par le guide de lumière (1) dans l'environnement à travers le revêtement (10), **caractérisé en ce que** le guide de lumière (1) est en fibre simple et que le revêtement textile (10) est une bande étroite de textile tissée bidimensionnelle (3) formé par les fils de chaîne longitudinaux (33) et par les fils de trame transversaux (34), dont l'un des bords est formé d'un tube intégralement tissé (32) et où le guide de lumière (1) est logé dans cette cavité (32), ou **en ce que** le revêtement textile (10) est un ruban tissé (5) avec deux bords (51) avec un tube intégralement tissé (52) disposé dans la surface du ruban (5) entre ces deux bords (51) et dans lequel le guide de lumière (1) est disposé dans la cavité (52).

2. Dispositif active de sécurité à émission de lumière selon la revendication 1, **caractérisé en ce que** la source de lumière est une source de la lumière visible.

3. Dispositif active de sécurité à émission de lumière selon la revendication 1, **caractérisé en ce que** la source de lumière est une source de la lumière UV.

4. Dispositif active de sécurité à émission de lumière selon la revendication 3 **caractérisé en ce que** la surface du guide de lumière (1) est munie d'un luminophore.

5. Dispositif active de sécurité à émission de lumière selon l'une quelconque des revendications précédentes, **caractérisé en ce que** le revêtement textile (10) présente des bandes transversales et/ou longitudinales qui se diffèrent par les couleurs.

6. Dispositif active de sécurité à émission de lumière selon l'une quelconque des revendications précédentes, **caractérisé en ce que** le guide de lumière (1) est une fibre optique polymère à émission latérale.
